# EUROPEAN PATENT APPLICATION

(11) **EP 4 432 506 A1**
(43) Date of publication of application: **18.09.2024**
(21) Application number: 23219744.2
(22) Date of filing: 22.12.2023
(51) Int. Cl.: H02J 3/32, H02J 7/00

(54) **BATTERY SYSTEM**

(30) Priority: 14.03.2023 KR 20230033460
(71) Applicant: Samsung SDI Co., Ltd., Yongin-si, Gyeonggi-do 17084 (KR)
(72) Inventor: Seo, Jeawon, Yong-si, Gyeonggi-do 17084 (KR)
(74) Representative: Gulde & Partner

(57) **Abstract**

A battery system (20, 100), including a plurality of racks, and a system manager (140) to manage the plurality of racks, each rack of the plurality of racks having at least one rack battery (110) connected between a first battery terminal (B+) and a second battery terminal (B-), a rack switch (120) connected between the at least one rack battery (110) and the first battery terminal (B+), and a rack manager (130) configured to estimate a state of charge of the at least one rack battery (110), transmit the estimated state of charge to the system manager (140), and control the rack switch (120), the system manager (140) being configured to receive the state of charge of each of the at least one rack battery (110) from the respective rack manager (130), open the rack switch (120) to disconnect any of the at least one rack battery (110) having a state of charge of 0% or 100%, and continuously discharge or charge any rack battery (110) not disconnected.

## Description

### BACKGROUND

### 1. Field

One or more embodiments relate to a battery system.

### 2. Description of the Related Art

Energy storage systems are used to improve energy efficiency by storing surplus power if power demand is low and using the stored power if the power demand is high. With the recent expansion of the supply of smart grids and renewable energy, and the emphasis on the efficiency and stability of power systems, demand for energy storage systems has gradually increased to control the power supply and demand and improve power quality, and the energy storage capacity of battery systems has also increased.

Battery systems may have a large energy storage capacity by connecting battery racks to one another in parallel. If battery systems are used for a long time, some battery racks may be replaced, and accordingly, the degradation states of the battery racks may vary greatly. If a state of charge (SOC) of any one of the battery racks reaches 100% or 0% during charging or discharging, battery systems stop charging or discharging with regard to all battery racks, even if the SOC of any remaining battery racks do not reach 100% or 0%. Accordingly, battery systems end up using a percentage less than an actual energy storage capacity of the battery system.

### SUMMARY

Embodiments are directed to a battery system, including a plurality of racks, and a system manager to manage the plurality of racks, each rack of the plurality of racks having at least one rack battery connected between a first battery terminal and a second battery terminal, a rack switch connected between the at least one rack battery and the first battery terminal, and a rack manager configured to estimate a state of charge of the at least one rack battery, transmit the estimated state of charge to the system manager, and control the rack switch, the system manager being configured to receive the state of charge of each of the at least one rack battery from the respective rack manager, open the rack switch to disconnect any of the at least one rack battery having a state of charge of 0% or 100%, and continuously discharge or charge any rack battery not disconnected.

The battery system may include, in a charge mode, the system manager being configured to open the rack switch of the at least one rack battery reaching a state of charge of 100%, continuously charge any rack battery not disconnected, and stop charging the battery system if a state of charge of any rack battery connected to a closed rack switch reaches 100% and a preset number of rack switches are open.

The battery system may include the system manager being configured to close the rack switch of any rack battery having a rack voltage with a difference from a battery voltage, which difference is equal to or less than a preset reference value, from among any rack battery connected to open rack switches if the rack batteries connected to closed rack switches are discharged and the battery voltage between the first and second battery terminals is lowered.

The battery system may include, in a discharge mode, the system manager being configured to open a rack switch of the at least one rack battery reaching a state of charge of 0%, continuously discharge any rack battery not disconnected, and stop discharging the battery system if a state of charge of any rack battery connected to a closed rack switch reaches 0% and a preset number of rack switches are open.

The battery system may include the system manager being configured to close the rack switch of any rack battery having a rack voltage with a difference from a battery voltage, which difference is equal to or less than a preset reference value, from among any rack battery connected to open rack switches if the rack batteries connected to the closed rack switches are charged and the battery voltage between the first and second battery terminals increases.

The battery system may include, in a charge mode, each of the rack managers being configured to calculate a state of charge of a corresponding rack battery by a current integration method and transmit the calculated state of charge to the system manager.

The battery system may include, in a charge mode, the system manager being configured to open a first rack switch connected to a first rack battery reaching a state of charge of 100% from among the plurality of rack batteries and continuously charge remaining rack batteries, a first rack manager being configured to manage the first rack battery, detect an open circuit voltage (OCV) of the first rack battery, update a state of charge of the first rack battery on the basis of the open circuit voltage, and transmit the updated state of charge to the system manager, and the system manager being configured to close the first rack switch and continuously charge the first rack battery together with the remaining rack batteries if the updated state of charge of the first rack battery is less than 100%.

The battery system may include the system manager being configured to close the first rack switch if the updated state of charge state of the first rack battery is less than 100% and a difference between a rack voltage of the first rack battery and a battery voltage between the first and second battery terminals being less than or equal to a preset reference value.

The battery system may include, in a discharge mode, each of the rack managers being configured to calculate a state of charge of a corresponding rack battery by a current integration method and transmit the calculated state of charge to the system manager.

The battery system may include, in a discharge mode, the system manager being configured to open a first rack switch connected to a first rack battery reaching a state of charge of 0% from among the plurality of rack batteries and continuously discharge remaining rack batteries, a first rack manager being configured to manage the first rack battery, detect an open circuit voltage of the first rack battery, update the state of charge of the first rack battery on the basis of the open circuit voltage, and transmit the updated state of charge to the system manager, and the system manager being configured to close the first rack switch and continuously discharge the first rack battery together with the remaining rack batteries if the updated state of charge of the first rack battery exceeds 0%.

The battery system may include the system manager being configured to close the first rack switch if the updated state of charge of the first rack battery exceeds 0% and a difference between a rack voltage of the first rack battery and a battery voltage between the first and second battery terminals being less than or equal to a preset reference value.

Embodiments are directed to a battery system, including a plurality of racks, and a system manager to manage the plurality of racks, each rack of the plurality of racks having at least one rack battery connected between a first battery terminal and a second battery terminal, a rack switch connected between the at least one rack battery and the first battery terminal, and a rack manager configured to estimate a state of charge of the at least one rack battery, transmit the estimated state of charge to the system manager, and control the rack switch.

The battery system may include, in a charge mode, the system manager being configured to open the rack switch of the at least one rack battery reaching a state of charge of 100%, continuously charge any rack battery not disconnected, and stop charging the battery system if a state of charge of any rack battery connected to a closed rack switch reaches 100% and a preset number of rack switches are open.

The battery system may include the system manager being configured to close the rack switch of any rack battery having a rack voltage with a difference from a battery voltage, which difference is equal to or less than a preset reference value, from among any rack battery connected to open rack switches if the rack batteries connected to closed rack switches are discharged and the battery voltage between the first and second battery terminals is lowered.

The battery system may include, in a discharge mode, the system manager being configured to open a rack switch of the at least one rack battery reaching a state of charge of 0%, continuously discharge any rack battery not disconnected, and stop discharging the battery system if a state of charge of any rack battery connected to a closed rack switch reaches 0% and a preset number of rack switches are open.

The battery system may include the system manager being configured to close the rack switch of any rack battery having a rack voltage with a difference from a battery voltage, which difference is equal to or less than a preset reference value, from among any rack battery connected to open rack switches if the rack batteries connected to the closed rack switches are charged and the battery voltage between the first and second battery terminals increases.

The battery system may include, in a charge mode each of the rack managers being configured to calculate a state of charge of a corresponding rack battery by a current integration method and transmit the calculated state of charge to the system manager.

The battery system may include, in a charge mode, the system manager being configured to open a first rack switch connected to a first rack battery reaching a state of charge of 100% from among the plurality of rack batteries and continuously charge remaining rack batteries, a first rack manager being configured to manage the first rack battery, detect an open circuit voltage of the first rack battery, update a state of charge of the first rack battery on the basis of the open circuit voltage, and transmit the updated state of charge to the system manager, and the system manager being configured to close the first rack switch and continuously charge the first rack battery together with the remaining rack batteries if the updated state of charge of the first rack battery is less than 100%.

The battery system may include the system manager being configured to close the first rack switch if the updated state of charge state of the first rack battery is less than 100% and a difference between a rack voltage of the first rack battery and a battery voltage between the first and second battery terminals is less than or equal to a preset reference value.

The battery system may include, in a discharge mode, each of the rack managers being configured to calculate a state of charge of a corresponding rack battery by a current integration method and transmit the calculated state of charge to the system manager.

The battery system may include, in a discharge mode, the system manager being configured to open a first rack switch connected to a first rack battery reaching a state of charge of 0% from among the plurality of rack batteries and continuously discharge remaining rack batteries, a first rack manager being configured to manage the first rack battery, detect an open circuit voltage of the first rack battery, update the state of charge of the first rack battery on the basis of the open circuit voltage, and transmit the updated state of charge to the system manager, and the system manager being configured to close the first rack switch and continuously discharge the first rack battery together with the remaining rack batteries if the updated state of charge of the first rack battery exceeds 0%.

The battery system may include the system manager being configured to close the first rack switch if the updated state of charge of the first rack battery exceeds 0% and a difference between a rack voltage of the first rack battery and a battery voltage between the first and second battery terminals is less than or equal to a preset reference value.

Embodiments are directed to a method for managing a battery system, including managing, by a system manager, a plurality of racks, estimating a state of charge of at least one rack battery, transmitting the estimated state of charge to the system manager, controlling a rack switch to disconnect any of the at least one rack battery having a state of charge of 0% or 100% based on the estimated state of charge, and continuously discharging or charging any rack battery not disconnected.

The method may further include opening the rack switch of at least one rack battery reaching a state of charge of 100%, continuously charging any rack battery not disconnected, and stopping the battery system from charging if a state of charge of any rack battery connected to a closed rack switch reaches 100% and a preset number of rack switches are open.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

Features will become apparent to those of skill in the art by describing in detail exemplary embodiments with reference to the attached drawings, in which:
FIG. 1 is a schematic diagram showing an energy storage system and peripheral components, according to embodiments;
FIG. 2 is a schematic, block diagram showing an energy storage system, according to embodiments;
FIG. 3 is a schematic, block diagram showing a battery system, according to embodiments;
FIGS. 4A and 4B are example tables showing charging and discharging methods of an existing battery system;
FIG. 5 is an example table showing a charging method of a battery system, according to an embodiment;
FIG. 6 is an example table showing a discharging method of a battery system, according to an embodiment;
FIG. 7 is an example table showing a charging method of a battery system, according to an embodiment; and
FIG. 8 is an example table showing a discharging method of a battery system, according to an embodiment.

### DETAILED DESCRIPTION

Example embodiments will be described in more detail below with reference to the accompanying drawings. However, embodiments may be embodied in several forms and should not be construed as limited to the embodiments described herein. These embodiments are provided so that the disclosure is thorough and complete, and example implementations may be fully conveyed to those skilled in the art.

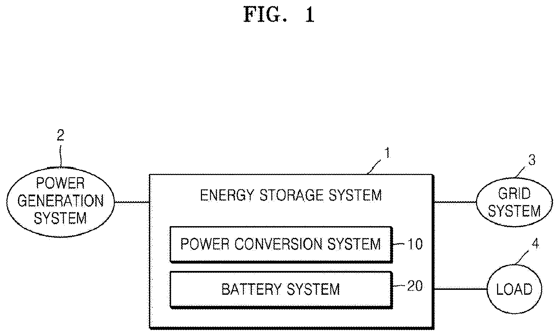

Referring to FIG. 1, an energy storage system 1 according to embodiments supplies power to a load 4 in connection with a power generation system 2 and a grid system 3. The energy storage system 1 includes a power conversion system (hereinafter "PCS") 10 that converts power and a battery system 20 that stores power. The PCS 10 may convert power provided by power generation system 2, grid system 3, and/or battery system 20 into an appropriate form of power and supply converted power to load 4, battery system 20, and/or grid system 3.

The power generation system 2 may refer to a system that generates power from an energy source. The power generation system 2 may supply generated power to energy storage system 1. The power generation system 2 may include, for example, at least one power generation system from among a solar power generation system, a wind power generation system, a tidal power generation system, and a diesel or natural gas power generation system, or a combined power generation system in which some thereof are combined. For example, power generation system 2 may also include power generation systems that generate power by using new renewable energy such as solar heat or geothermal heat. Power generation system 2 may constitute a large-capacity power generation system by arranging, in parallel, a plurality of power generation modules capable of generating power.

Grid system 3 may include a power plant, a substation, a power transmission line, and the like. If grid system 3 is in a normal state, grid system 3 may supply power to load 4 and/or battery system 20, or may be supplied with power from battery system 20 and/or power generation system 2. If grid system 3 is in an abnormal state, power transfer between grid system 3 and energy storage system 1 may be stopped.

Load 4 may consume power generated by power generation system 2, power stored in battery system 20, and/or power supplied from grid system 3. Electrical devices in a home or factory in which the energy storage system 1 is installed may be examples of load 4.

The energy storage system 1 may store power generated by power generation system 2 in battery system 20 or may supply generated power to grid system 3. The energy storage system 1 may supply grid system 3 with power stored in battery system 20 or may store power supplied from grid system 3 in battery system 20. If grid system 3 is in an abnormal state, e.g., if a power outage occurs, energy storage system 1 may supply load 4 with power generated by power generation system 2 or power stored in battery system 20 by performing an uninterruptible power supply (UPS) function.

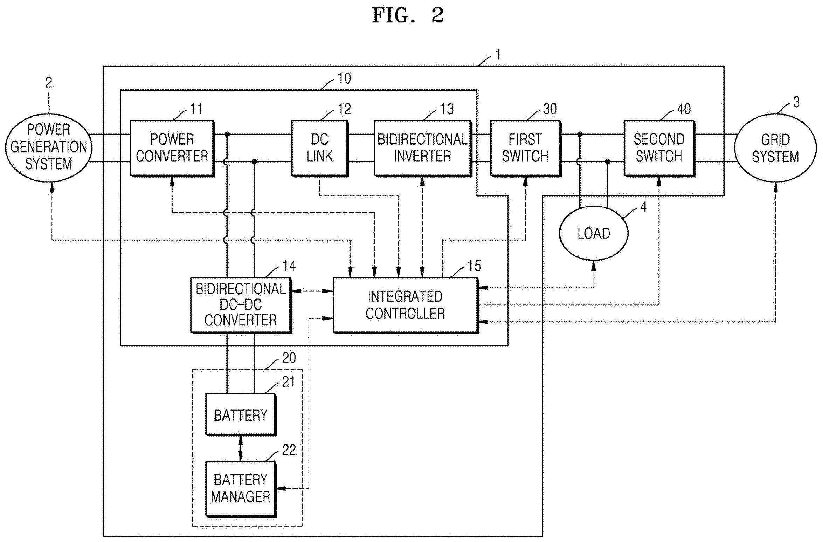

FIG. 2 is a block diagram showing a schematic structure of an energy storage system, according to an embodiment.

Referring to FIG. 2, an energy storage system 1 may include a PCS 10, a battery system 20, a first switch 30, and a second switch 40. The battery system 20 may include a battery 21 and a battery manager 22.

The PCS 10 may convert power provided by a power generation system 2, a grid system 3, and/or battery system 20 into an appropriate form of power and supply converted power to a load 4, a battery system 20, and/or a grid system 3. The PCS 10 may include a power converter 11, a direct current (DC) link 12, a bidirectional inverter 13, a bidirectional DC-DC converter 14, and an integrated controller 15.

The power converter 11 may be a power conversion device connected between power generation system 2 and DC link 12. The power converter 11 may convert power generated by power generation system 2 into DC power and transmit DC power to DC link 12. The power converter 11 may include a power conversion circuit such as a converter circuit or a rectifier circuit, according to type of power generation system 2. If power generation system 2 generates DC power, power converter 11 may include a DC-DC converter circuit for converting DC power generated by power generation system 2 into another form of DC power. If power generation system 2 generates alternating current (AC) power, power converter 11 may include a rectifier circuit for converting AC power generated by power generation system 2 into DC power.

If power generation system 2 is a solar power generation system, power converter 11 may include a maximum power point tracking (MPPT) converter circuit that performs MPPT control to obtain power generated by power generation system 2 to maximum according to changes in solar radiation, temperature, and the like. If power generation system 2 does not generate power, an operation of power converter 11 may be stopped, and thus power consumed by power converter 11 may be minimized.

Even if an instantaneous voltage of power generation system 2 or grid system 3 drops or a peak load occurs in load 4, DC link 12 may be connected among power converter 11, bidirectional inverter 13, and bidirectional DC-DC converter 14 to keep a DC link voltage substantially constant. The DC link 12 may include, for example, a large-capacity capacitor. The DC link voltage may be, for example, 400 V.

The bidirectional inverter 13 may be a power conversion device connected between DC link 12 and first switch 30. The bidirectional inverter 13 may convert DC power of DC link 12 supplied from power generation system 2 and/or battery system 20 into AC power and output AC power to grid system 3 and/or load 4. The bidirectional inverter 13 may convert AC power supplied from grid system 3 into DC power and output DC power to DC link 12 to charge battery system 20.

The bidirectional inverter 13 may include a filter for removing harmonic components from AC power output to grid system 3 and/or load 4. The bidirectional inverter 13 may include a phase-locked loop (PLL) circuit for synchronizing a phase of AC power output from bidirectional inverter 13 with a phase of AC power of grid system 3 to suppress generation of reactive power. The bidirectional inverter 13 may perform a multitude of functions, including functions such as but not restricted to limiting a range of voltage fluctuations, improving a power factor, removing DC components, and protecting or reducing transient phenomena.

The bidirectional DC-DC converter 14 may be connected between DC link 12 and battery system 20. If discharging battery system 20, the bidirectional DC-DC converter 14 may output power stored in battery system 20 to DC link 12 by converting a discharge voltage of battery system 20 into a DC link voltage of DC link 12. If charging battery system 20, bidirectional DC-DC converter 14 may output power of DC link 12 to battery system 20 by converting DC link voltage of DC link 12 into a charge voltage for charging battery system 20. If battery system 20 is idle, i.e., if neither charging nor discharging battery system 20, an operation of bidirectional DC-DC converter 14 may be paused or stopped, and power consumption may thereby be reduced or minimized.

The integrated controller 15 may monitor states of power generation system 2, grid system 3, battery system 20, and load 4. For example, integrated controller 15 may monitor whether or not a power outage occurs in grid system 3, whether or not power is generated by power generation system 2, an amount of power generated by power generation system 2, a state of charge (SOC) of battery system 20, an amount of power consumed by load 4, a time, and like.

Integrated controller 15 may control operations of power converter 11, bidirectional inverter 13, bidirectional DC-DC converter 14, battery system 20, first switch 30, and second switch 40, according to results of monitoring and a preset algorithm.

If a power outage occurs in grid system 3, integrated controller 15 may control the power stored in battery system 20 or the power generated by power generation system 2 to be supplied to load 4. If sufficient power is not capable of being supplied to load 4, integrated controller 15 may prioritize electrical devices of load 4 and control to supply power to electrical devices having high priorities. Integrated controller 15 may control charging and discharging of battery system 20. Integrated controller 15 may control an amount of discharge current and an amount of charge current according to a state of battery system 20. For example, integrated controller 15 may control a maximum amount of allowable discharge current and a maximum amount of allowable charge current of battery system 20 by using bidirectional DC-DC converter 14. If some battery racks of battery system 20 are disconnected, the integrated controller 15 may reduce a maximum amount of allowable discharge current and maximum amount of allowable charge current, according to a ratio of parameters of disconnected battery racks.

The first switch 30 and second switch 40 are connected to each other in series between bidirectional inverter 13 and grid system 3, and are closed or opened under control of integrated controller 15 to control a flow of current among DC link 12, load 4, and grid system 3. First switch 30 and second switch 40 may be closed or open, respectively, according to states of power generation system 2, grid system 3, and battery system 20. For example, if power from power generation system 2 and/or battery system 20 is supplied to load 4 or power from grid system 3 is supplied to battery system 20, the first switch 30 is closed. If power from power generation system 2 and/or battery system 20 is supplied to grid system 3 or power from grid system 3 is supplied to load 4, the second switch 40 is closed.

If a power outage occurs in grid system 3, the second switch 40 may be opened and the first switch 30 may be closed. In other words, power from power generation system 2 and/or battery system 20 may be supplied to load 4, and at the same time, power to be supplied to the load 4 may be prevented from leaking to the grid system 3. By opening the first switch 30 to disconnect the grid system 3 from energy storage system 1, a safer operational state may be achieved whereby, e.g., an accident may be prevented in which a worker working on a power line of grid system 3 or the like may be electrocuted by power supplied from power generation system 2 and/or battery system 20.

Battery system 20 may receive and store power supplied from power generation system 2 and/or grid system 3, and may supply power stored therein to load 4 and/or grid system 3. Battery system 20 is connected to bidirectional DC-DC converter 14. An output voltage of battery system 20 may be, for example, 50 V.

The battery system 20 may include battery 21 including battery cells to store power, and battery manager 22 for controlling and protecting battery 21. Battery system 20 may have battery racks connected to each other in parallel. Battery cells may be mounted within battery racks. The battery manager 22 may include battery rack managers for respectively managing the battery racks and a system manager for communicating with the battery rack managers to manage battery system 20.

Battery manager 22 may be connected to battery 21 and may control overall operation of battery system 20 according to a control command from integrated controller 15 or an internal algorithm. For example, battery manager 22 may perform an overcharge protection function, an over-discharge protection function, an overcurrent protection function, an overvoltage protection function, an overheating protection function, a cell balancing function, and the like. The battery manager 22 may collect a voltage, a current, a temperature, a remaining power amount, a life, a SOC, and the like of battery 21. For example, battery manager 22 may measure a cell voltage, a current, and a temperature of battery 21 by using sensors. The battery manager 22 may estimate (or calculate) a remaining power amount, a life, a SOC, and the like of battery 21, on the basis of measured cell voltage, current, and temperature. The battery manager 22 may manage battery 21 on the basis of the result of any one or more of the measurements, one or more of the results of the estimations, and the like.

The battery manager 22 may transmit results of the one or more measurements, the one or more results of the estimations, and the like, to integrated controller 15. In addition, battery manager 22 may transmit a connection state of lower battery racks to integrated controller 15. The battery manager 22 may control charging and discharging operations of battery 21 according to charge and discharge control commands received from integrated controller 15.

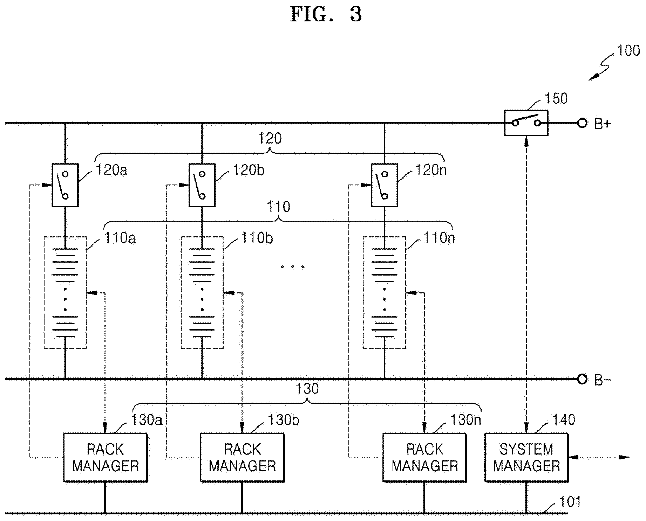

FIG. 3 is a schematic, block diagram showing a battery system, according to embodiments.

Referring to FIG. 3, a battery system 100 has battery terminals (e.g., a first terminal B+ and a second terminal B-), and includes rack batteries 110 (e.g., a first rack battery 110a, a second rack battery 110b, ..., and an n^{th} rack battery 110n), rack switches 120 (e.g., a fist rack switch 120a, a second rack switch 120b, ... and an n^{th} rack switch 120n), rack managers 130 (e.g., a first rack manager 130a, a second rack manager 130b, ..., and an n^{th} rack manager 130n), a system manager 140, and a system switch 150. The battery system 100 may correspond to battery system 20 shown in FIG. 2, rack batteries 110 may correspond to battery 21 shown in FIG. 2, and rack switches 120, rack managers 130, system manager 140, and system switch 150 may correspond to battery manager 22 shown in FIG. 2.

The battery system 100 may be implemented in a form of a plurality of racks. The plurality of racks are connected to one another in parallel between first and second battery terminals B+ and B-, and each of the plurality of racks may include the rack battery 110, the rack switch 120, and the rack manager 130.

The rack batteries 110 may include a plurality of rack batteries 110a to 110n configured to be selectively connected to one another in parallel between the first and second battery terminals B+ and B-. As used herein, the term "is selectively connected" indicates that it may be or may not be connected by an external control signal.

The rack battery 110 is a portion of the battery system 100 that stores power and includes battery cells. The battery cells may be connected to one another in series, in parallel, or in a combination of series and parallel. The number of battery cells included in the rack battery 110 may be determined according to a demanded or a predetermined output voltage.

The battery cells may include a rechargeable secondary battery. For example, the battery cells may include a nickel-cadmium battery, a lead storage battery, a nickel metal hydride (NiMH) battery, a lithium-ion battery, a lithium polymer battery, or other type of secondary battery.

The rack batteries 110a to 110n may be connected to one another in parallel via rack switches 120 and may be connected to bidirectional DC-DC converter 14 shown in FIG. 2 via first and second battery terminals B+ and B-. The battery system 100 may supply power to load 4 shown in FIG. 2 via bidirectional DC-DC converter 14 or may store power from grid system 3 shown in FIG. 2 and/or power generation system 2 shown in FIG. 2.

The rack switches 120 may include a plurality of rack switches 120a to 120n connected between rack batteries 110a to 110n and first battery terminal B+. The rack switches 120a to 120n may also be connected between rack batteries 110a to 110n and second battery terminal B-. In Fig. 3, rack switches 120a to 120n are respectively connected to rack batteries 110a to 110n in series, and rack batteries 110a to 110n are selectively connected between first and second battery terminals B+ and B- via corresponding rack switches 120a to 120n.

Each of the rack switches 120 may be directly controlled by the corresponding rack manager 130. According to another example, the rack manager 130 may transmit a control command for controlling the closing and opening of the rack switches 120, and a control device (e.g., an analog front end), which may receive the control command, may close or open the rack switches 120 according to the control command. The rack switches 120 may include, for example, relays or field effect transistor (FET) switches.

The rack managers 130 include a plurality of rack managers 130a to 130n respectively corresponding to rack batteries 110a to 110n. The rack manager 130 is configured to manage corresponding rack battery 110 and control corresponding rack switch 120. The rack managers 130a to 130n may communicate with system manager 140 via a network 101. The rack manager 130 may detect a state of rack battery 110 and transmit detected state to system manager 140 and may control the on/off of rack switch 120 according to the control command from system manager 140.

Rack manager 130 may measure a variety of parameters, including a temperature, a voltage, a current, and the like of rack battery 110. The rack manager 130 may measure rack voltage of the rack battery 110 and a cell voltage of battery cells of the rack battery 110. The rack manager 130 may include a voltage detector (not shown) for detecting the rack voltage of the rack battery 110. The voltage detector may include a voltage divider that is connected between a cathode and an anode of the rack battery 110 and outputs a voltage obtained by reducing the rack voltage of rack battery 110 at a preset rate, and may include an analog-to-digital converter (ADC) that converts an output of voltage divider into a digital signal. As used herein, a voltage between the cathode and the anode of rack battery 110 is referred to as a rack voltage, and a voltage of each of the battery cells within the rack battery 110 is referred to as a cell voltage. A voltage between the first and second battery terminals B+ and B- of battery system 100 is referred to as a battery voltage. If the rack battery 110 is connected to first and second battery terminals B+ and B- via rack switch 120, the rack voltage of the rack battery 110 and the battery voltage of the battery system 100 are substantially the same as each other. The rack manager 130 may include a current sensor for detecting a rack current of the rack battery 110 and a temperature sensor for detecting a temperature of the rack battery 110.

The rack manager 130 may estimate a SOC of the rack battery 110. The rack manager 130 may calculate the SOC of the rack battery 110 by using a current integration method. The rack manager 130 may include a memory that stores an open circuit voltage - state of charge (OCV-SOC) lookup table in which a relationship between an OCV and the SOC of the rack battery 110 is defined, and the rack manager 130 may measure the OCV of rack battery 110 and may estimate the SOC of rack battery 110 corresponding to the OCV.

The rack manager 130 may store a multitude of reference values, including an overvoltage reference value, a low voltage reference value, a high temperature reference value, an overcurrent reference value, and the like. The rack manager 130 may determine an abnormal state of the rack battery 110 by comparing the temperature, voltage, and current of the rack battery 110 with the reference values described above, and may perform a protection operation if an abnormality occurs in rack battery 110. For example, if the temperature of rack battery 110 exceeds a high temperature reference value, the rack manager 130 may open the rack switch 120. As another example, if an overcurrent occurs in the rack battery 110, the rack manager 130 may transmit the occurrence of the overcurrent to the system manager 140, and the system manager 140 may open the system switch 150.

The system switch 150 may be connected between the rack switches 120a to 120n and the first battery terminal B+. The system switch 150 may also be omitted.

The rack manager 130 may transmit, to system manager 140 via the network 101, various pieces of rack state information such as a result of measuring the temperature, voltage, current, and the like of the rack battery 110, a result of estimating the SOC, a health state, and the like, of the rack battery 110, and a state of the rack switch 120.

The system manager 140 may manage battery racks on the basis of the various pieces of rack state information transmitted from the rack managers 130a to 130n. The system manager 140 may transmit the various pieces of rack state information to the integrated controller 15 shown in FIG. 2. For example, system manager 140 may calculate a maximum amount of allowable discharge current and a maximum amount of allowable charge current on the basis of states of the rack switches 120a to 120n and transmit the calculated maximum amounts to the integrated controller 15. The integrated controller 15 may adjust a discharge current and a charge current of the battery system (100) on the basis of the maximum amount of allowable discharge current and the maximum amount of allowable charge current.

The system manager 140 may receive a control command from the integrated controller 15, and the system manager 140 may control the system switch 150 according to the control command from the integrated controller 15. The system manager 140 may transmit a rack control command to the rack managers 130a to 130n, and the rack managers 130a to 130n may perform an operation according to the rack control command.

According to an embodiment, the rack managers 130a to 130n may estimate the SOCs of the rack batteries 110a to 1 10n, respectively, and transmit the estimated SOCs to the system manager 140. The system manager 140 may receive the SOCs of the respective rack batteries 110a to 110n from the rack managers 130a to130n and, if the SOC of any one rack battery (e.g., the first rack battery 110a) from among the rack batteries 110a to 110n reaches 100% or 0%, may disconnect the first rack battery 110a from the first battery terminal B+ by opening first rack switch 120a connected to first rack battery 11 0a, and may continuously charge or discharge remaining rack batteries 110b to 110n.

If the SOC of any one rack battery (e.g., the second rack battery 1 10b) from among the remaining rack batteries 110b to 110n reaches 100 % or 0% due to continuous charging or discharging of the remaining rack batteries 110b to 1 10n, the system manager 140 may disconnect the second rack battery 110b from the first battery terminal B+ by opening the second rack switch 120b connected to the second rack battery 1 10b, and may continuously charge or discharge the remaining rack batteries 110c to 110n.

The above process may be performed until a preset number or more of rack batteries 110 are connected to first battery terminal B+. For example, if the number of rack batteries 110 is 10 and the number of rack batteries 110 preset to be connected to the first battery terminal B+ is 8, the SOC of another one rack battery (e.g., the third rack battery 110c) may reach 0% or 100% upon continuous discharging or charging of the remaining rack batteries 110c to 1 10n. In such an instance, if the preset number of rack batteries has been met, the third rack switch 120c need not be opened as the discharging or charging of the remaining rack batteries 110c to 110n may be stopped by the system manager 140. For example, the system manager 140 may transmit to the integrated controller 15 a message to stop discharging or charging the remaining rack batteries 110c to 110n.

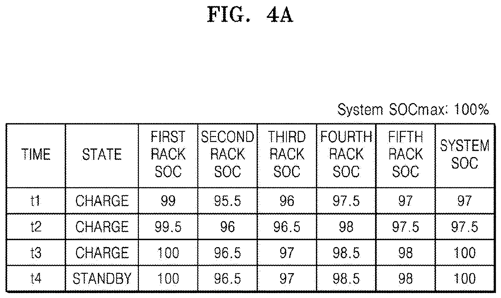

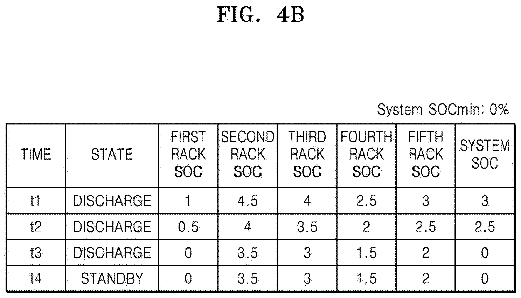

FIGS. 4A and 4B are example tables showing charging and discharging methods of a conventional battery system.

Referring to FIGS. 4A and 4B, if a SOC of any one of the rack batteries, e.g., first rack battery, reaches 0% or 100%, the discharging or charging of the entire rack battery, including first to fifth rack battery, is completely stopped.

As an example of an existing system, as shown in FIG. 4A, at t1 to t3, first to fifth rack batteries are charging. A system SOC at t1 and t2 may be represented as an average of SOCs of the first to fifth rack batteries. However, if the SOC of the first rack battery reaches 100% at t3, the system SOC will be displayed as 100%. After t3, charging of the first to fifth rack batteries is stopped, and the first to fifth rack batteries are put in a standby state. At t3, however, even though the actual average of the SOCs of the first to fifth rack batteries is 98% and 2% more charge capacity may be achieved, further charge is not possible in this existing system. In this existing system, the potential chargeable capacity of 100% SOC for an average of the connected batteries is effectively lowered by 2% in order to avoid or reduce the harmful effects of overcharging the battery system and results in deterioration or degradation of the battery system.

The same may apply to discharging. As shown in FIG. 4B, at t1 to t3, the first to fifth rack batteries are discharging. A system SOC at t1 and t2 may be represented as an average of SOCs of the first to fifth rack batteries. However, after the SOC of the first rack battery reaches 0% at t3, the system SOC is also displayed as 0%. After t3, discharge of the first to fifth rack batteries is stopped, and the first to fifth rack batteries go into a standby state. At t3, however, the actual average of the SOCs of the first to fifth rack batteries is 2%, and although 2% more power may be used, further discharge is not possible in this existing system. As a result, the potential dischargeable capacity of 2% for an average of the connected batteries is effectively lost and sacrificed in order to avoid or reduce the harmful effects of overdischarging the battery system, and the degree of deterioration or degradation of the battery system is increased.

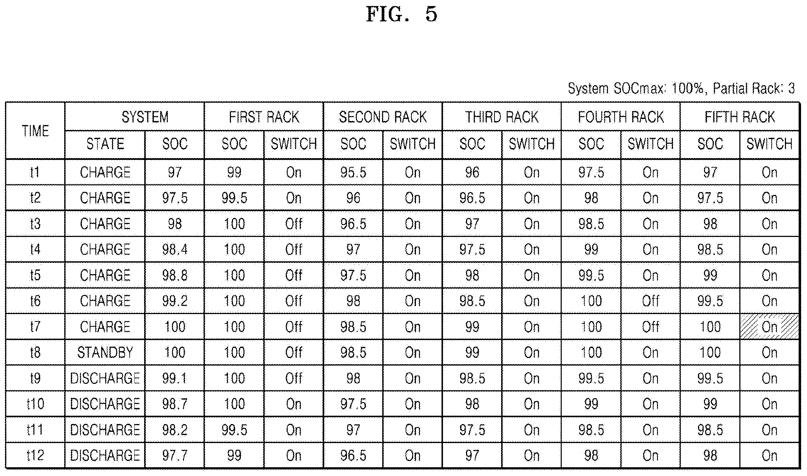

FIG. 5 is an example table showing a charging method of a battery system, according to embodiments. Referring to FIG. 5 together with FIG.3, if charging battery system 100, system manager 140 may open first rack switch 120a connected to a rack battery (e.g., first rack battery 110a) which reaches an SOC of 100% among rack batteries 110a to 110n, and may continuously charge remaining rack batteries 110b to 1 10n. Here, second to n^{th} rack switches 120b to 120n remain closed.

Subsequently, if an SOC of another rack battery (e.g., second rack battery 1 10b) also reaches 100%, the system manager 140 may open the second rack switch 120b. In the above method, if an SOC of a rack battery 110n reaches 100%, the corresponding rack switch 120n may be opened, and the remaining rack batteries 110 may be continuously charged. However, if a preset number of rack batteries 110 are already disconnected, charging of the rack batteries 110 may be stopped if another rack battery 110 reaching an SOC of 100% is detected. In other words, if the SOC of any one rack battery (e.g., third rack battery 110c) reaches 100% from among third to n^{th} rack batteries 110c to 110n connected to closed rack switches (e.g., third to n^{th} rack switches 120c to 120n) while the preset number of rack switches 120 are opened from among rack switches 120a to 120n, the system manager 140 may stop charging the battery system 100.

In the above example, a rack voltage of first rack battery 11 0a, which is completely charged earliest, is the lowest, and a rack voltage of the second rack battery 1 10b, which is completely charged next, is next lowest rack voltage. Rack voltages of other rack batteries are comparatively the same and the next highest. In the above state, if first and second rack switches 120a and 120b are closed, a current flows from the third and nth rack batteries 110c to 110n to the first and second rack batteries 110 and 1 10b. and the SOC of the first and second rack batteries 110a and 110b may exceed 100%.

If the third to n^{th} rack batteries 110c to 110n connected to closed third to n^{th} rack switches 120c to 120n are discharged and thus a battery voltage between the first and second battery terminals B+ and B- is lowered, the system manager 140 according to embodiments may close second rack switch 120b connected to a rack battery (e.g., the second rack battery 1 10b) having a rack voltage with a difference from the battery voltage, which is less than or equal to a preset reference value, from among the first and second rack batteries 110a and 110b connected to the open first and second rack switches 120a and 120b. The preset reference value may be differently set according to the magnitude of the battery voltage, i.e., the preset reference value may be 5 V. Subsequently, if the battery voltage is further lowered and thus has a difference from the rack voltage of the first rack battery 1 10b, which is less than or equal to the preset reference value, the system manager 140 may close the first rack switch 120a, to adjust battery voltage, for example.

Referring to FIG. 5, battery system 100 is charging from t1 to t7. In the example table shown in FIG. 5, the battery system 100 may have five rack batteries 110a to 110e, and, from among five rack batteries 110a to 1 10e, three or more rack batteries 110 may be connected or counted towards the preset reference value or preset number. In FIG. 3, "Partial Rack: 3" is a reference that indicates that three or more rack batteries 110 may be connected or counted towards the preset reference value or preset number.

After t3, if the SOC of first rack battery 110a reaches 100%, first rack switch 120a is opened, i.e., is turned off, by system manager 140. Second to fifth rack batteries 110b to 110e continue to charge, but not the first rack battery. After t6, if an SOC of fourth rack battery 1 10d reaches 100%, fourth rack switch 120d is also opened, i.e., turned off, by the system manager 140. Second, third, and fifth rack batteries 11 0b, 110c, and 110e continue to charge. After t7, the SOC of fifth rack battery 110e reaches 100%, but since three or more rack batteries 110 in the battery system need to be connected and counted in the battery system 100 as a preset number, and the fifth rack switch 120e need not be opened and, instead, charging of battery system 100 may be ended by the system manager 140. Accordingly, after t8, battery system 100 is put in a standby state.

In standby state, a battery voltage of battery system 100 may be compared with each of first and fourth rack voltages of the first and fourth rack batteries 110a and 1 10d that are closed. If a difference between the battery voltage and the fourth rack voltage is less than or equal to a predetermined reference value, the fourth rack switch 120d may be closed. Since the difference between the fourth rack voltage of the fourth rack battery 1 10d and the battery voltage is not great, a low current flows into the fourth rack battery 1 10d, which does not significantly increase the SOC of the fourth rack battery 1 10d. However, after t3, the rack voltage of the disconnected first rack battery 110a may be significantly different from the battery voltage, and in this case, first rack switch 120a may be open.

The battery system 100 may be discharged at t9. In detail, second to fifth rack batteries 110b to 110e are discharged through second to fifth rack switches 120b to 120e that are closed, and the battery voltage gradually decreases. At t10, a difference between the battery voltage and the first rack voltage of first rack battery 110a may be less than or equal to a predetermined reference value, and at this time, the first rack switch 120a may be closed, i.e., may be turned on, by the system manager 140. Subsequently, all of first to fifth rack batteries 110a to 110e may be discharged together.

Continuing with reference to FIG. 5, although the system SOC is displayed as 100% at time t7 when charging is complete, the average SOC of the first to fifth rack batteries 110a to 110e is 99.5%. In the example of FIG. 4A, the actual average SOC is 98% when the system SOC is represented to be 100%, and thus, according to the present embodiment, power corresponding to 1.5% may be further charged.

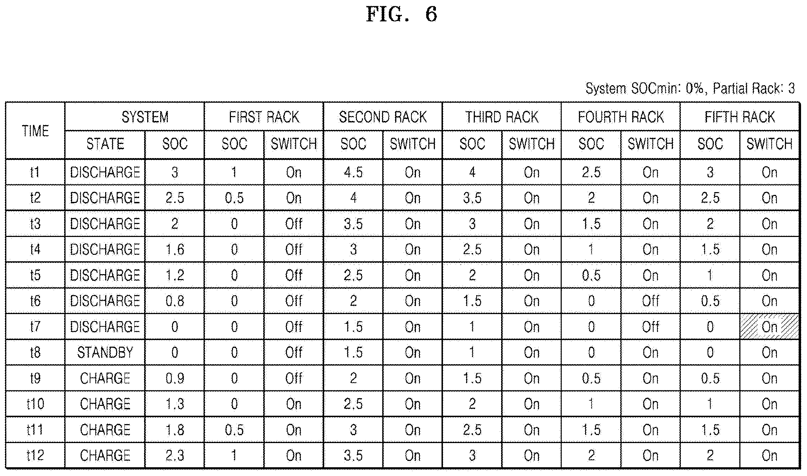

FIG. 6 is an example table showing a discharging method of a battery system, according to an embodiment. Referring to FIG. 6 together with FIG. 3, if discharging battery system 100, system manager 140 may open first rack switch 120a connected to a rack battery (e.g., first rack battery 110a), which reaches an SOC of 0%, from among rack batteries 110a to 110n, and may continuously discharge remaining rack batteries 110b to 1 10n. Here, second to n^{th} rack switches 120b to 120n are closed.

Subsequently, if the SOC of another rack battery (e.g., second rack battery 1 10b) also reaches 0%, the second rack switch 120b may be opened by the system manager 140. In this manner, if the SOC of the rack battery 110 reaches 0%, the corresponding rack switch 120 may be opened, and the remaining rack batteries 110 may be continuously discharged. However, if the preset number of rack batteries 110 are disconnected, the system manager may stop the discharging of the rack batteries 110 if a rack battery 110 reaches an SOC of 0. In other words, if an SOC of any one rack battery reaches 0% from among the third to n^{th} rack batteries 110c to 110n connected to closed rack switches (e.g., the third n^{th} rack switches 120c to 120n) while the preset number of rack switches 120 are opened, system manager 140 may stop discharging of battery system 100.

In the above example, a rack voltage of the first rack battery 1 10a, which is completely discharged earliest, is highest, a rack voltage of the fourth rack battery 1 10b, which is completely discharged next, has the next lowest voltage that is higher than the rack voltage of the first rack battery 1 10a, and rack voltages of other rack batteries which discharge have next lowest voltage that is higher than the voltage of the preceding completely discharged rack battery. Here, if the first and fourth rack switches 120a and 120d are closed, a current flows to the first rack battery from the fourth rack battery that may force the SOC to be lower than 0%, which is an undesired state of overdischarging

If the third to n^{th} rack batteries 110c to 110n connected to the closed third to n^{th} rack switches 120c to 120n are charged and thus a battery voltage between first and second battery terminals B+ and B- increases, system manager 140 according to an embodiment may close second rack switch 120b connected to a rack battery (e.g., second rack battery 110b) having a rack voltage with a difference from battery voltage, which is less than or equal to a preset reference value, from among first and second rack batteries 110a and 110b connected to open first and second rack switches 120a and 120b. The preset reference value may be differently set according to magnitude of battery voltage, for example, 5V. Subsequently, if battery voltage further increases and thus has a difference from rack voltage of first rack battery 110b which is less than or equal to the preset reference value, system manager 140 may close first rack switch 120a.

Referring to FIG. 6, battery system 100 is discharging from t1 to t7. In the example of FIG. 6, battery system 100 may have five rack batteries 110a to 110e and, from among the five rack batteries 110a to 1 10e, three which become fully discharged, each opening a corresponding switch 120 as they each reach 0% SOC, respectively, with three being an example preset number.

After t3, if an SOC of first rack battery 110a reaches 0%, first rack switch 120a is opened, i.e., is disconnected, by the system manager 140. Second to fifth rack batteries 110b to 110e continue to discharge. After t6, if the SOC of fourth rack battery 110d reaches 0%, the fourth rack switch 120d is also opened, i.e., turned off, by system manager 140. Subsequently, second, third, and fifth rack batteries 110b, 1 10c, and 110e are continuously discharged. After t7, the SOC of fifth rack battery 110e reaches 0%, and since only three or more rack batteries 110 in this example need to be connected to one another in battery system 100, the system manager does not open the fifth rack switch, and discharging of battery system 100 ends. Accordingly, after t8, battery system 100 is in a standby state.

In standby state, a battery voltage of battery system 100 may be compared with each of first and fourth rack voltages of the first and fourth rack batteries 110a and 1 10d that are closed. If a difference between the battery voltage and the fourth rack voltage is less than or equal to a preset reference value, the fourth rack switch 120d may be closed. The difference between the fourth rack voltage of the fourth rack battery 1 10d and the battery voltage is not great, and thus, a low current flows and thus does not significantly lower the SOC of the fourth rack battery 1 10d. However, after t3, the rack voltage of the disconnected first rack battery 110a may be significantly different from a reference voltage or a fourth rack battery voltage, and in this case, the first rack switch 120a may not be closed, i.e., may be opened.

Referring to FIG. 6, the battery system 100 may be charged at t9. In detail, the second to fifth rack batteries 110b to 110e are charged through the second to fifth rack switches 120b to 120e that are closed, and the battery voltage gradually increases. At t10, a difference between the battery voltage and the first rack voltage of the first rack battery 110a may be less than or equal to the preset reference value, and at this time, the first rack switch 120a may be closed, i.e., may be turned on. Subsequently, all of the first to fifth rack batteries 110a to 110e may be charged together.

A system SOC is represented to be 0% at the time of t7 when charging is completed, but an average SOC of the first to fifth rack batteries 110a to 110e is 0.5%. In the example of FIG. 4B, the actual average SOC is 2% when the system SOC is represented to be 0%, at t3, and thus, according to the present embodiment, power corresponding to 1.5% may be further discharged.

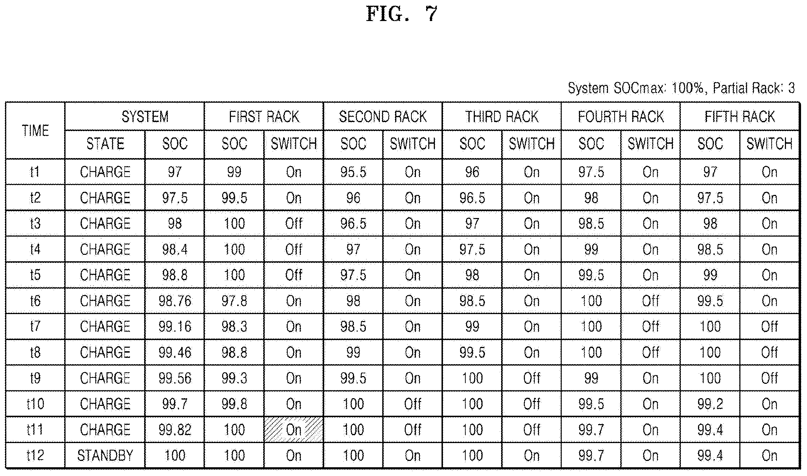

FIG. 7 is an example table showing a charging method of a battery system, according to an embodiment.

If charging battery system 100, rack managers 130a to 130n may calculate SOCs of rack batteries 110a to 110n by a current integration method and transmit calculated SOCs to system manager 140. The system manager 140 may open first rack switch 120a connected to a rack battery (e.g., first rack battery 1 10a), which reaches an SOC of 100%, from among rack batteries 110a to 110n, and may continuously charge the remaining rack batteries.

The first rack manager 130a, which manages first rack battery 1 10a, may detect an OCV of first rack battery 1 10a, may update an SOC of first rack battery 110a based on the OCV, and may transmit the updated SOC to the system manager 140. If the updated SOC of the first rack battery 110a is less than 100%, the system manager 140 may close the first rack switch 120a and continuously charge the first rack battery 110a together with the remaining rack batteries 110b to 110e.

Before closing the first rack switch 120a, the system manager 140 may compare a difference between a first rack voltage of the first rack battery 110a and a battery voltage with a preset reference value. If the updated SOC of the first rack battery 110a is less than 100% and the difference between the first rack voltage and the battery voltage is less than or equal to the preset reference value, the first rack switch 120a may be closed.

The first rack battery 110a may deteriorate more than the other rack batteries 110b to 110n. Here, a maximum charge capacity of the first rack battery 110a is set to be low, and thus, the SOC calculated by the current integration method may be higher than an actual SOC. In addition, if a sensing error occurs in a current sensor of the first rack battery 1 10a, the SOC calculated by the current integration method may be higher than the actual SOC. According to the disclosure, the first rack switch 120a connected to the first rack battery 110a may be opened, the first rack battery 110a may be idle, and an OCV may be measured. According to embodiments, first rack manager 130a may measure OCV of first rack battery 110a while first rack switch 120a is open, and re-estimate SOC based on OCV of first rack battery 110a by using a prestored OCV-SOC lookup table. The first rack manager 130a may update the SOC of the first rack battery 110a to the re-estimated SOC. The re-estimated SOC may be less than 100%.

In the above method, second rack switch 120b may be opened for a rack battery (e.g., second rack battery 110b) reaching an SOC of 100%, SOC of second rack battery 110b may be updated, and second rack battery 110b may be re-charged based on updated SOC of second rack battery 110b.

In embodiments if the preset number of rack batteries of the battery system 100 are opened, charging of the battery system 100 may be stopped.

Referring to FIG. 7, the battery system 100 is charged from t1 to t11. In the example of FIG. 7, the battery system 100 may have five rack batteries 110a to 110e, and, from among the five rack batteries 110a to 1 10e, three or more rack batteries 110 should be connected to one another.

After t3, if the SOC of the first rack battery 110a reaches 100%, the first rack switch 120a is opened, i.e., turned off. Subsequently, the second to fifth rack batteries 110b to 110e are continuously charged. At t6, the first rack manager 130a may update the SOC of the first rack battery 110a based on an open circuit voltage of the first rack battery 1 10a. The updated SOC of the first rack battery 110a may be 97.8%. The SOC of the first rack battery 110a is less than 100%, and thus, the system manager 140 may additionally charge the first rack battery 110a by closing the first rack switch 120a.

In addition, after t6, an SOC of the fourth rack battery 110d reaches 100%, and thus, the fourth rack switch 120d is opened, i.e., turned off. At t9, the fourth rack manager 130d may update the SOC of the fourth rack battery 110d on the basis of an OCV of the fourth rack battery 1 10d. The updated SOC of the fourth rack battery 110d may be 99%. If the SOC of the fourth rack battery 110d is less than 100%, the system manager 140 may additionally charge the fourth rack battery 110d by closing the fourth rack switch 120d again.

After t7, an SOC of the fifth rack battery 110e reaches 100%, and thus, the fifth rack switch 120e is opened, i.e., turned off. At t10, the fifth rack manager 130e may update the SOC of the fifth rack battery 110e on the basis of an OCV of the fifth rack battery 1 10e. The updated SOC of the fifth rack battery 110e may be 99.2%. The SOC of the fifth rack battery 110e is less than 100%, and thus, the system manager 140 may additionally charge the fifth rack battery 110e by closing the fifth rack switch 120e again.

After t9, an SOC of the third rack battery 110c reaches 100%, and thus, the third rack switch 120c is opened, i.e., is turned off. In addition, after t10, an SOC of the second rack battery 110b reaches 100%, and thus, the second rack switch 120b is opened, i.e., turned off. At t11, an SOC of the first rack battery 110a is 100%, but the second and third rack switches 120b and 120c are already opened, and thus, the first rack switch 120a is not opened and charging of the battery system 100 ends at t12. At t12, the second and third rack switches 120b and 120c, which are open, may be closed. Even at this time, a difference between a battery voltage and a rack voltage may be compared with a preset reference value. Subsequently, all of the first to fifth rack batteries 110a to 110e may be discharged together.

A system SOC is effectively 99.82% at time t12 if charging ends, because an average SOC of first to fifth rack batteries 110a to 110e is 99.82%. In the example of FIG. 4A, the actual average SOC is 98% when the system SOC is represented to be 100%, and thus, according to the present embodiment, power corresponding to 1.82% may be further charged.

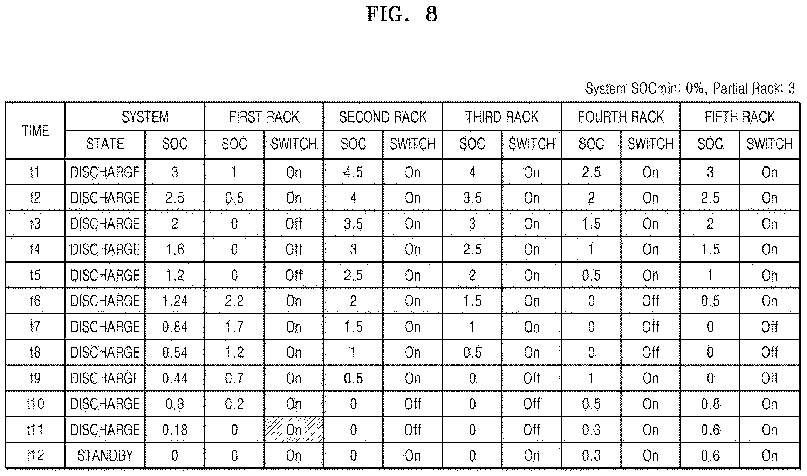

FIG. 8 is an example table showing a discharging method of a battery system, according to embodiments.

If discharging the battery system 100, the rack managers 130a to 130n may respectively calculate SOCs of the rack batteries 110a to 110n by a current integration method and transmit the calculated SOCs to the system manager 140. The system manager 140 may open the first rack switch 120a connected to a rack battery (e.g., the first rack battery 110a), which reaches an SOC of 0%, from among the rack batteries 110a to 1 10n, and may continuously discharge the remaining rack batteries.

The first rack manager 130a, which manages the first rack battery 110a disconnected from the battery terminals B+ and B-, may detect an OCV of the first rack battery 110a, may update an SOC of the first rack battery 110a on the basis of the OCV, and may transmit the updated SOC to the system manager 140. If the updated SOC of the first rack battery 110a exceeds 0%, the system manager 140 may close the first rack switch 120a and continuously discharge the first rack battery 110a together with the remaining rack batteries 110b to 110n.

Before closing the first rack switch 120a, the system manager 140 may compare a difference between a first rack voltage of the first rack battery 110a and a battery voltage with a preset reference value. If the updated SOC of the first rack battery 110a exceeds 0% and the difference between the first rack voltage and the battery voltage is less than or equal to the preset reference value, the first rack switch 120a may be closed.

According to the present embodiment, the first rack switch 120a, which is connected to the first rack battery 110a reaching the SOC of 0%, may be opened, the first rack battery 110a may be idle, and the OCV may be measured. According to the present embodiment, the first rack manager 130a may measure the open circuit voltage of the first rack battery 110a while the first rack switch 120a is opened, and may re-estimate the SOC based on the open circuit voltage of the first rack battery 110a by using a pre-store OCV-SOC lookup table. The first rack manager 130a may update the SOC of the first rack battery 110a to the re-estimated SOC. The re-estimated SOC may be greater than 0%.

In the above method, the second rack switch 120b may be opened also for a rack battery (e.g., the second rack battery 110b) reaching a SOC of 0%, the SOC of the second rack battery 110b may be updated, and the second rack battery 110b may be re-discharged on the basis of the updated SOC of the second rack battery 110b.

If a preset number or more of rack batteries of the battery system 100 are opened, discharging of the battery system 100 may be stopped.

Referring to FIG. 8, the battery system 100 is shown to be discharging from t1 to t11. In the example of FIG. 8, the battery system 100 may have five rack batteries 110a to 1 10e, and, from among the five rack batteries 110a to 1 10e, three or more rack batteries 110 should be connected to one another.

After t3, if the SOC of the first rack battery 110a reaches 0%, the first rack switch 120a is opened, i.e., turned off. Subsequently, the second to fifth rack batteries 110b to 110e are continuously discharged. At t6, the first rack manager 130a may update the SOC of the first rack battery 110a on the basis of an OCV of the first rack battery 1 10a. The updated SOC of the first rack battery 110a may be 2.2%. The SOC of the first rack battery 110a is greater than 0%, and thus, the system manager 140 may additionally discharge the first rack battery 110a by closing the first rack switch 110a again.

In addition, after t6, an SOC of the fourth rack battery 110d reaches 0%, and thus, the fourth rack switch 120d is opened, i.e., turned off. At t9, the fourth rack manager 130d may update the SOC of the fourth rack battery 110d on the basis of an open circuit voltage of the fourth rack battery 110d. The updated SOC of the fourth rack battery 110d may be 1%. The SOC of the fourth rack battery 110e is greater than 0%, and thus, the system manager 140 may additionally discharge the fourth rack battery 110e by closing the fourth rack switch 120d again.

After t7, the SOC of the fifth rack battery 110e reaches 0%, and thus, the fifth rack switch 120e is opened, i.e., turned off. At t10, the fifth rack manager 130e may update the SOC of the fifth rack battery 110e on the basis of an open circuit voltage of the fifth rack battery 1 10e. The updated SOC of the fifth rack battery 110e may be 0.8%. The SOC of the fifth rack battery 110e is greater than 0%, and thus, the system manager 140 may additionally discharge the fifth rack battery 110e by closing the fifth rack switch 120e again.

After t9, an SOC of the third rack battery 110c reaches 0%, and thus, the third rack switch 120c is opened, i.e., turned off. In addition, after t10, an SOC of the second rack battery 110b reaches 0%, and thus, the second rack switch 120b is opened, i.e., turned off. At t11, the SOC of the first rack battery 110a is 0%, but the second and third rack switches 120b and 120c are already opened, and thus, the first rack switch 120a is not opened, and discharging of the battery system 100 ends at t12.

At t12, the second and third rack switches 120b and 120c, which are opened, may be closed. Even at this time, a difference between a battery voltage and a rack voltage may be compared with a preset reference value. Subsequently, all of the first to fifth rack batteries 110a to 1 10e may be charged together.

A system SOC is effectively 0.18% at time t12 if discharging ends, because an average SOC of the first to fifth rack batteries 110a to 110e is 0.18%. In the example of FIG. 4B, the actual average SOC is 2% when the system SOC is represented to be 0%, and thus, according the present embodiment, power corresponding to 1.82% may be further discharged.

A battery system according to the disclosure may use up to a capacity approximately close to an actual energy storage capacity. Accordingly, a ratio of an actual use capacity to an initial energy storage capacity of the battery system may increase.

Certain embodiments illustrated and described herein are examples for description and are not intended to limit the scope of the embodiments in any way. For brevity, descriptions of existing electronic components, control systems, software, and other functional aspects of the above systems may be omitted. In addition, connections or connectors of lines between components shown in the drawings are examples of functional connections and/or physical or circuit connections and may be implemented as various alternative or additional functional connections, physical connections, or circuit connections in an actual device.

When describing embodiments (in particular, claims), the use of the term "the" and similar indicative terms may correspond to both singular and plural. In addition, if the range is described in the embodiments, it includes an invention applying individual values belonging to the range (unless there is a description contrary thereto) and is like each individual value constituting the range is described in the description. Finally, steps constituting a method according to the disclosure may be performed in any appropriate order unless an order is explicitly stated or stated to the contrary. The disclosure is not necessarily limited according to the order of description of the steps. In the disclosure, the use of all examples or example terms (e.g., etc.) is simply for describing the disclosure in detail, and the scope of the embodiments is not limited by the examples or example terms unless limited by the claims. In addition, those skilled in the art may understand that various modifications, combinations, and changes may be made according to design conditions and factors within the scope of the appended claims or equivalents thereof.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery system (20, 100), comprising:
a plurality of racks; and
a system manager (140) to manage the plurality of racks,
each rack of the plurality of racks having:
at least one rack battery (110) connected between a first battery terminal (B+) and a second battery terminal (B-);
a rack switch (120) connected between the at least one rack battery (110) and the first battery terminal (B+); and
a rack manager (130) configured to estimate a state of charge of the at least one rack battery (110), transmit the estimated state of charge to the system manager (140), and control the rack switch (120).

2. The battery system (20, 100) as claimed in claim 1, wherein the system manager (140) is configured to:
receive the state of charge of each of the at least one rack battery (110) from the respective rack manager (130).

3. The battery system (20, 100) as claimed in claim 2, wherein the system manager (140) is further configured to:
open the rack switch (120) to disconnect any of the at least one rack battery (110) having a state of charge of 0% or 100%, and
continuously discharge or charge any rack battery (110) not disconnected.

4. The battery system (20, 100) as claimed in claim 1 or 3, wherein in a charge mode, the system manager (140) is configured to:
open the rack switch (120) of the at least one rack battery (110) reaching a state of charge of 100%,
continuously charge any rack battery (110) not disconnected, and
stop charging the battery system (20, 100) if a state of charge of any rack battery (110) connected to a closed rack switch (120) reaches 100% and a preset number of rack switches are open.

5. The battery system (20, 100) as claimed in claim 4, wherein the system manager (140) is configured to close the rack switch (120) of any rack battery (110) having a rack voltage with a difference from a battery voltage, which difference is equal to or less than a preset reference value, from among any rack battery (110) connected to open rack switches if the rack batteries (110) connected to closed rack switches are discharged and the battery voltage between the first and second battery terminals (B+, B-) is lowered.

6. The battery system (20, 100) as claimed in claim 1 or 3, wherein in a discharge mode, the system manager (140) is configured to:
open a rack switch (120) of the at least one rack battery (110) reaching a state of charge of 0%,
continuously discharge any rack battery (110) not disconnected, and
stop discharging the battery system (20, 100) if a state of charge of any rack battery (110) connected to a closed rack switch (120) reaches 0% and a preset number of rack switches are open.

7. The battery system (20, 100) as claimed in claim 6, wherein the system manager (140) is configured to close the rack switch (120) of any rack battery (110) having a rack voltage with a difference from a battery voltage, which difference is equal to or less than a preset reference value, from among any rack battery (110) connected to open rack switches if the rack batteries (110) connected to the closed rack switches are charged and the battery voltage between the first and second battery terminals (B+, B-) increases.

8. The battery system (20, 100) as claimed in claim 1 or 3, wherein in a charge mode:
each of the rack managers (130) is configured to calculate a state of charge of a corresponding rack battery (110) by a current integration method and transmit the calculated state of charge to the system manager (140).

9. The battery system (20, 100) as claimed in claim 8, wherein the system manager (140) is configured to open a first rack switch (120a) connected to a first rack battery (110a) reaching a state of charge of 100% from among the plurality of rack batteries (110) and continuously charge remaining rack batteries (110), a first rack manager (130a) is configured to manage the first rack battery (110a), detect an open circuit voltage of the first rack battery (110a), update a state of charge of the first rack battery (1 10a) on the basis of the open circuit voltage, and transmit the updated state of charge to the system manager (140), and the system manager (140) is configured to close the first rack switch (120a) and continuously charge the first rack battery (110a) together with the remaining rack batteries (110) if the updated state of charge of the first rack battery (1 10a) is less than 100%.

10. The battery system (20, 100) as claimed in claim 9, wherein the system manager (140) is configured to close the first rack switch (120a) if the updated state of charge state of the first rack battery (110a) is less than 100% and a difference between a rack voltage of the first rack battery (110a) and a battery voltage between the first and second battery terminals (B+, B-) is less than or equal to a preset reference value.

11. The battery system (20, 100) as claimed in claim 1 or 3, wherein, in a discharge mode, each of the rack managers (130) is configured to calculate a state of charge of a corresponding rack battery (110) by a current integration method and transmit the calculated state of charge to the system manager (140).

12. The battery system (20, 100) as claimed in claim 11, wherein the system manager (140) is configured to open a first rack switch (120a) connected to a first rack battery (110a) reaching a state of charge of 0% from among the plurality of rack batteries (110) and continuously discharge remaining rack batteries, a first rack manager (130a) is configured to manage the first rack battery (110a), detect an open circuit voltage of the first rack battery (110a), update the state of charge of the first rack battery (1 10a) on the basis of the open circuit voltage, and transmit the updated state of charge to the system manager (140), and the system manager (140) is configured to close the first rack switch (120a) and continuously discharge the first rack battery (110a) together with the remaining rack batteries (110) if the updated state of charge of the first rack battery (1 10a) exceeds 0%.

13. The battery system (20, 100) as claimed in claim 12, wherein the system manager (140) is configured to close the first rack switch (120a) if the updated state of charge of the first rack battery (1 10a) exceeds 0% and a difference between a rack voltage of the first rack battery (1 10a) and a battery voltage between the first and second battery terminals (B+, B-) is less than or equal to a preset reference value.

14. A method for managing a battery system (20, 100), comprising:
managing, by a system manager (140), a plurality of racks,
estimating a state of charge of at least one rack battery (110),
transmitting the estimated state of charge to the system manager (140),
controlling a rack switch (120) to disconnect any of the at least one rack battery (110) having a state of charge of 0% or 100% based on the estimated state of charge, and
continuously discharging or charging any rack battery (110) not disconnected.

15. The method as claimed in claim 14, further comprising:
opening the rack switch (120) of at least one rack battery (110) reaching a state of charge of 100%,
continuously charging any rack battery (110) not disconnected, and
stopping the battery system (20, 100) from charging if a state of charge of any rack battery (110) connected to a closed rack switch (120) reaches 100% and a preset number of rack switches are open.
